# EUROPÄISCHE PATENTSCHRIFT

(11) **EP 0 835 596 B1**
(45) Veröffentlichungstag und Bekanntmachung des Hinweises auf die Patenterteilung: **03.11.1999**
(21) Anmeldenummer: 96920706.7
(22) Anmeldetag: 26.06.1996
(51) Int. Cl.: H04Q 11/04, H04M 3/22

(54) **VERFAHREN ZUM SPEZIFIZIEREN VON MULTIFUNKTIONALEN BAUGRUPPEN IN EINEM KOMMUNIKATIONSSYSTEM**
METHOD OF SPECIFYING MULTIFUNCTIONAL SUBASSEMBLIES IN A COMMUNICATION SYSTEM
PROCEDE POUR LA SPECIFICATION DE SOUS-ENSEMBLES POLYVALENTS DANS UN SYSTEME DE COMMUNICATION

(30) Priorität: 30.06.1995 DE 19524024
(43) Veröffentlichungstag der Anmeldung: 15.04.1998
(73) Patentinhaber: SIEMENS AKTIENGESELLSCHAFT, 80333 München (DE)
(72) Erfinder: HASS, Karl-Heinz, D-81739 München (DE); KLUG, Karl, D-83714 Miesbach (DE); VON LINDEINER, Hans-Dietrich, D-86316 Friedberg (DE)
(86) Internationale Anmeldenummer: DE9601131
(87) Internationale Veröffentlichungsnummer: WO9702717

(56) Entgegenhaltungen:
- EP-A- 0 398 129
- DE-A- 4 100 198
- GB-A- 2 202 062
- IEEE JOURNAL ON SELECTED AREAS IN COMMUNICATION, Bd. SAC-3, Nr. 4, Juli 1985, NEW YORK US, Seiten 561-568, XP002019238 A.L.JACKSON ET AL.:

## Beschreibung

Kommunikationssysteme, insbesondere private und öffentliche Vermittlungsanlagen, enthalten überwiegend programmgesteuerte Baugruppen, die in Abhängigkeit von der Konfiguration des Kommunikationssystems sowie von den unterschiedlichsten Signalisierungen und Übertragungsverfahren in den eingesetzten Kommunikationsnetzen schaltungs- und programmtechnisch unterschiedlich ausgestaltet sind. Ein Kommunikationssystem mit einer derartigen Baugruppenkonzeption ist beispielsweise aus der Druckschrift "ISDN in the office, HICOM", insbesondere Seite 56 bis 64, 1985, Fa. Siemens bekannt. Hierbei ist jede der Baugruppen, beispielsweise die Signalisierungseinheit oder die Leitungssatzbaugruppen, mit einer Steuereinheit, d.h. einem Mikroprozessor, ausgestattet und die erforderlichen schaltlungstechnischen Komponenten, wie beispielsweise Teilnehmeranschlußschnittstellen oder Schnittstellen für den internen Kommunikationsaustausch, sind jeweils auf den Baugruppen angeordnet. Die hierfür vorgesehenen unterschiedlichsten schaltungs- und programmtechnischen Realisierungen der Baugruppen bedeuten eine Vielfalt von unterschiedlichen, für ein Kommunikationssystem vorzusehenden Baugruppen, die durch schaltungs- und programmtechnische Weiterentwickelungen der Baugruppen weiter zunimmt. Die erforderliche Vielfalt ist mit einem erhöhten wirtschaftlichen Aufwand bzw. mit erhöhten Kosten bei der Herstellung - unterschiedlichste Bestückungsvarianten -, bei der Prüfung - eine Vielzahl von Prüfprogrammen - und bei der Lagerhaltung - Platz- und Verwaltungsaufwand - der Baugruppen verbunden.

Das Dokument DE-A-4 100 198 (Allen Bradley Co) offenbart ein Verfahren mit den im Oberbegriff des Anspruchs 1 erwähnten Merkmalen.

Die der Erfindung zugrundeliegende Aufgabe besteht darin, den durch die Baugruppenvielfalt verursachten wirtschaftlichen Aufwand zu reduzieren. Die Aufgabe wird durch die kennzeichnenden Merkmale des Anspruchs 1 gelöst.

Der wesentliche Aspekt der erfindungsgemäßen Verfahren ist darin zu sehen, daß die schaltungstechnischen und prozeduralen Funktionen eines Funktionsbereiches eines Kommunikationssystems, d.h. eines Bereiches mit ähnlichen Funktionen, auf einer Bereichsbaugruppe zusammengefaßt werden. Beispielsweise stellt eine Bereichsbaugruppe eine der zentralen Steuerung zugeordnete Signalisierungsbaugruppe dar, auf der alle schaltungstechnischen Komponenten zusammengefaßt sind, die für die Bearbeitung aller im Kommunikationssystem vorgesehenen Ausprägungen von Signalisierungsprozeduren erforderlich sind. Die durch die Bereichsbaugruppen möglich realisierbaren schaltungstechnischen und prozeduralen Funktionen, bezogen auf die Signalisierungsbaugruppe die möglichen Signalisierungen und deren Varianten, werden durch die Kombination einer Schaltungstechnik- und zumindest eine Funktionsidentifikation spezifiziert, d,h. bestimmt. Zusätzlich ist jeder der gebildeten Kombination einer Schaltungstechnik- und zumindest einer Funktionsidentifikation zumindest ein Programmodul zugeordnet, durch das die prozedurale Funktion bzw. die prozeduralen Funktionen der durch die Kombination der Identifikationen bestimmte Funktion bzw. Funktionen programmtechnisch realisiert sind. Durch das zumindest eine Programmodul können zusätzlich durch entsprechend eingefügte Informationen schaltungstechnische Einstellungen, beispielsweise Wirksam- oder Unwirksamschaltung, der schaltungstechnischen Komponenten bewirkt werden. Das zumindest eine Programmodul kann im Kommunikationssystem selbst - z.B Hard Disk, Streamer CD-ROM -, in einem dem Kommunikationssystem beigestellten Speicher - z.B CD-ROM - oder in einer Servicezentrale im dem jeweiligen Kommunikationsnetz gespeichert sein und jeweils von dort mit Hilfe der zentralen Steuerung an die Bereichsbaugruppe übermittelt werden.

Bei einer Konfiguration des Kommunikationssystems, beispielsweise bei der Inbetriebnahme oder bei einer Änderung der Konfiguration des Kommunikationssystems, wird an die einzurichtende Bereichsbaugruppe eine durch die zentrale Steuerung bestimmte Kombination einer Schaltungstechnik- und zumindest einer Funktionsidentifikation übermittelt und in dieser gespeichert. Durch die Speicherung der Kombination der beiden Identifikationen ist die jeweilige Bereichsbaugruppe spezifiziert, d.h. die gewünschten schaltungstechnischen und prozeduralen Funktionen sind aus den möglichen eindeutig ausgewählt bzw. definiert. Anschließend wird mit Hilfe der zentralen Steuerung des Kommunikationssystems das zugeordnete, zumindest eine Programmodul an die jeweilige Bereichsbaugruppe übermittelt und dort gespeichert. Der wesentliche Vorteil des erfindungsgemäßen Verfahren ist darin zu sehen, daß durch das Zusammenfassen der schaltungstechnsichen Komponenten zumindest eines Funktionsbereiches auf einer Bereichsbaugruppe und die Funktionsauswahl bzw. Spezifikation dieser Bereichsbaugruppe durch eine Kombination einer Schaltungstechnik- und zumindest einer Funktionsidentifikation die Vielfalt unterschiedlichster Baugruppen erheblich verringert und somit eine erhebliche Reduzierung des wirtschaftlichen Aufwandes bei der Herstellung, Prüfung und Lagerhaltung von Baugruppen für ein Kommunikationssystem erreicht wird. Ein weiterer Vorteil des erfindungsgemäßen Verfahren ist darin zu sehen, daß die schaltungstechnischen und prozeduralen Eigenschaften einer Bereichsbaugruppe bei einer Änderung der Konfiguration des Kommunikationssystems durch eine Umkonfiguration der Bereichsbaugruppe durch Übermitteln und Speichern einer geänderten Schaltungstechnik- und zumindest einer Funktionsidentifikation und das Übermitteln anderer Programmodule von der zentralen Steuerung erreicht wird, ohne daß eine Baugruppe getauscht werden muß. Hierdurch werden aufwendige BeschaffungsLagerhaltungs- oder Entsorgungsmaßnahmen vermieden.

Nach dem Einrichten der jeweiligen Bereichsbaugruppe wird diese mit Hilfe der zentralen Steuerung in Betrieb genommen und in den Funktionsablauf des Kommunikationssystems einbezogen - Anspruch 2. Bei der Übermittlung mehrerer Programmodule werden diese nacheinander mit Hilfe der zentralen Steuerung in Betrieb genommen und in den Funktionsablauf einbezogen.

In der zentralen Steuerung ist vorteilhaft in einer Konfigurationstabelle die Konfiguration des jeweiligen Kommunikationssystems administriert, wobei in die Konfigurationstabelle für die zu konfigurierenden Bereichsbaugruppen jeweils eine vorgegebene Kombination einer Schaltungstechnik- und zumindest einer Funktionsidentifikation eingetragen ist - Anspruch 3. Die Kombination einer Schaltungstechnik- und zumindest einer Funktionsidentifikation wird durch den jeweiligen Netzbetreiber festgelegt und bedieneroberflächengesteuert in die Konfigurationstabelle eingetragen. Bei der beispielhaft angegebenen Signalisierungs-Bereichsbaugruppe ist die Kombination der Schaltungstechnik- und zumindest einer Funktionsidentifikation durch die in dem jeweiligen Kommunikationssystem zu bearbeitenden Signalisierungen bzw. Signalisierungsprotokolle und deren Ausprägungen bestimmt.

Die Schaltungstechnikidentifikation ist vorteilhaft durch eine Bereichsbaugruppen-Typeniformation repräsentiert, die die wesentliche Funktion der jeweiligen Bereichsbaugruppe anzeigt - Anspruch 4; beispielsweise die Typeninformation "Signalisierungs-Bereichsbaugruppe". Alternativ sind Abkürzungen für die jeweiligen Typeninformationen vorteilhaft.

Die Funktionsidentifikation ist gemäß einer weiteren Ausgestaltung des erfindungsgemäßen Verfahrens durch eine numerische Information, eine die Subfunktionalität des zu ladenden, zumindest einen Programmoduls anzeigende Funktionsinformation und eine das zumindest eine zu ladende Programmodul identifizierende Programmidentifikation gebildet - Anspruch 5. Durch diese Kombination von Informationen ist eine eindeutige Zuordnung eines zumindest einen, die prozeduralen Funktionen realisierenden Programmoduls zu den jeweiligen Bereichsbaugruppen geweben. Die Programmidentifikation ist beispielsweise durch den Programmnamen des jeweiligen Programmoduls repräsentiert. Die Funktionsinformation wird beispielsweise durch eine Information gebildet, die ein Signalisierungsprotokoll als kommunikationssystem- oder kommunikationsendgeräteseitig definiert.

Gemäß einer weiteren vorteilhaften Ausgestaltung des erfindungsgemäßen Verfahrens wird die Schaltungstechnik- und die zumindest eine Funktionsidentifikation in der Bereichsbaugruppe in einem nichtflüchtigen, elektrisch lösch- und programmierbaren Speicher gespeichert - Anspruch 6. Hierdurch wird eine restartsichere Speicherung der Schaltungstechnik- und der zumindest einen Funktionsidentifikation erreicht, d.h. sie müssen bei einem durch Hardware- oder Softwarefehler verursachten Restart nicht nachgeladen werden.

In dem nichtflüchtigen, elektrisch lösch- und programmierbaren Speicher ist zusätzlich eine den Typ der Bereichsbaugruppe anzeigende Typeninformation gespeichert. Diese wird beispielsweise bei der Herstellung einer Bereichsbaugruppe in dem Speicher eingespeichert und wird beim Einrichten einer Baugruppe im Sinne des Erkennen des Typs der eingesteckten Bereichsbaugruppe von der zentralen Steuerung gelesen.

Weitere vorteilhafte Ausgestaltungen des erfindungsgemäßen Verfahren sind den weiteren Ansprüchen zu entnehmen.

Im folgenden wird das erfindungsgemäße Verfahren anhand eines Blockschaltbildes und eines Ablaufdiagrammes näher erläutert. Dabei zeigen
- FIG 1: in einem Blockschaltbild ein zur Realisierung des erfindungsgemäßen Verfahren vorgesehenes Kommunikationssystem und
- FIG 2: in einem Ablaufdiagramm das Einrichten einer Bereichsbaugruppe

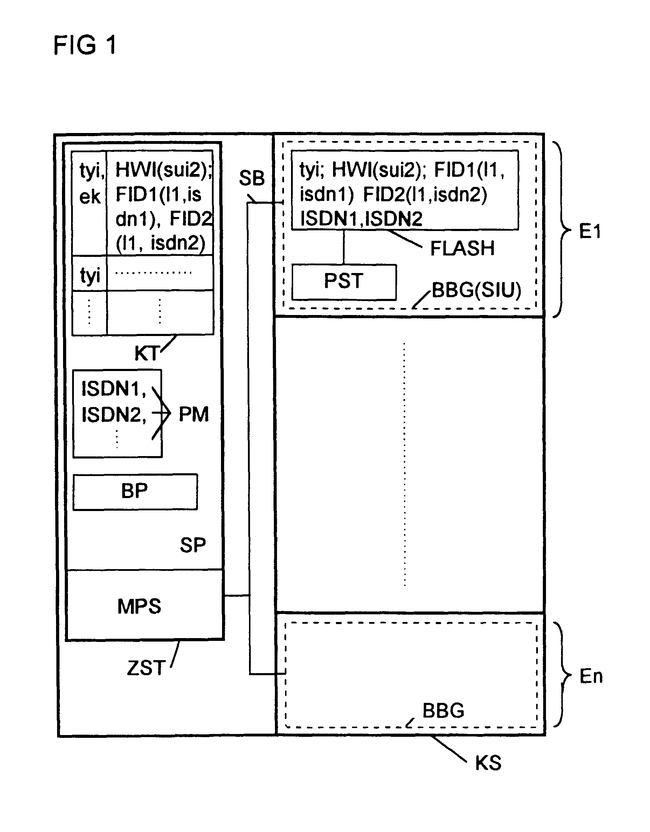

FIG 1 zeigt ein Kommunikationssystem KS, in dem eine zentrale Steuerung ZST sowie mehrere Einbauplätze E1..n für Bereichsbaugruppen BBG vorgesehen sind. In diese mit nicht dargestellten Steckeinrichtungen ausgestattete Einbauplätze E1..n werden in Abhängigkeit von der vorgesehenen Konfiguration des Kommunikationssystem KS Bereichsbaugruppen BBG eingesteckt. Zur Erläuterung des erfindungsgemäßen Verfahren ist beispielhaft eine Bereichsbaugruppe BBG am ersten Einbauplatz El durch strich-lierte Linien dargestellt. Diese dargestellte und weitere Bereichsbaugruppen BBG sind über einen Systembus SB parallel mit der zentralen Steuerung ZST verbunden. Alternativ sind Einzelverbindungen mit einer seriellen Informationsübermittlung möglich - nicht dargestellt. Die zentrale Steuerung ZST ist durch ein Mikroprozessorsystem MPS und einen Speicher SP gebildet, wobei der Speicher SP integraler Bestandteil des Mikroprozessorsystems sein kann. Für das Auführungsbeispiel sei angenommen, daß die Bereichsbaugruppen BBG an beliebigen Einbauplätzen E1..n gesteckt werden können. Alternativ sich Einschränkungen bei der Zuordnung von Einbauplätzen E1..n zu den unterschiedlichen Typen von Bereichsbaugruppen BBG möglich, d.h. unterschiedliche Typen von Bereichsbaugruppen BBG müssen an festgelegten Einbauplätzen gesteckt werden.

Jede Bereichsbaugruppe BBG enthält alle schaltungstechnischen Komponenten, die zur Realisierung eines Funktionsbereiches eines Kommunikationssystems KS erforderlich sind. Hierbei weist der jeweilige Funktionsbereich vorzugsweise ähnliche Funktionen, beispielsweise sämtliche Signalisierungsfunktionen, auf. Für das Ausführungsbeispiel ist beispielhaft angenommen, daß alle schaltungstechnischen Komponenten auf einer Bereichsbaugruppe SIU angeordnet sind, die zur Realisierung aller in dem jeweiligen Kommunikationssystem KS möglichen Signalisierungen erforderlich sind. Mögliche Signalisierungen sind beispielsweise unterschiedliche analoge oder digitale Zwischenamts-Signalisierungsverfahren für unterschiedliche Länder. Bei den Schaltungskomponenten handelt es sich beim Ausführungsbeispiel insbesondere um unterschiedliche Ausgestaltungen der zur Realisierung des jeweiligen Signalisierungsprotokolls erforderlichen Mikroprozessorsysteme. Bei Bereichsbaugruppen BBG, die beispielsweise auf den Teilnehmeranschlußbereich bezogen sind - nicht dargestellt - sind unterschiedlichste schaltungstechnische Komponenten insbesondere hinsichtlich der unterschiedlichen Teilnehmeranschluß- bzw. Teilnehmerübertragungstechnik auf einer Bereichsbaugruppe BBG bzw. einigen Bereichsbaugruppen BBG - z.B. analog, digital - zusammengefaßt.

Jede der Bereichsbaugruppen BBG enthält zur ihrer Steuerung bzw. zu ihrem Betrieb eine periphere Steuerung PST, die vorzugsweise durch ein Mikroprozessorsystem realisiert ist. Diese periphere Steuerung PST enthält neben üblichen Speichern - nicht dargestellt - einen nichtflüchtigen, elektrisch lösch- und programmierbaren Speicher FLASH, in den beispielsweise bei der Herstellung der Bereichsbaugruppe BBG eine Typeninformation tyi programmiert wurde. Durch diese Typeninformation tyi ist der Typ der Bereichsbaugruppe BBG bestimmt; auf das Ausführungsbeispiel bezogen für die Signalisierungs-Bereichsbaugruppe SIU die Typeninformation SIU. Sind beispielsweise zwei Signalisierungs-Bereichsbaugruppen vorgesehen, so ist die Typinformation tyi beispielsweise durch SIU1 und SIU2 bestimmt. Analog hierzu ist die Typeninformation tyi für beispielsweise Teilnehmeranschluß-Bereichsbaugruppen zu bilden.

Im Speicher SP der zentralen Steuerung ist neben den zur Vermittlung, zum Betreiben und zum Warten des Kommunikationssystems KS vorgesehenen Programmen BP eine Konfigurationstabelle KT gespeichert, in der die Konfiguration des Kommunikationssystems KS festgelegt ist. Die Festlegung der Konfiguration des Kommunikationssystems KS erfolgt durch den Betreiber eines Kommunikationssystems KS, wobei die sich durch die Festlegung ergebende Konfigurationstabelle KT durch betriebstechnische Eingaben im Speicher SP administriert wird. Die Konfigurationstabelle KT enthält für jede Bereichsbaugruppe BBG, die in das Kommunikationssystem KS aufgrund der festgelegten Konfiguration einzustecken ist, eine entsprechende Typeninformation tyi. Dieser Typeninformation tyi ist eine Schaltungstechnik- und zumindest eine Funktionsidentifikation HWI,FID1..n zugeordnet. Die Schaltungstechnikidentifikation HWI ist bezogen auf das Ausführungsbeispiel beispielsweise durch die Bereichsbaugruppen-Typeninformation siu2 bestimmt, wobei beispielsweise durch die numerische Information eine schaltungstechnische Einstellung einer Bereichsbaugruppe BBG definiert ist. Durch Übermitteln dieser Schaltungstechnikidentifikation HWI an die zugeordnete Bereichsbaugruppe BBG werden in dieser die zur Realisierung einer bestimmten Signalisierung vorgesehen schaltungstechnischen Komponenten wirksam bzw. unwirksam geschaltet oder die vorhandenen Schaltungskomponenten auf vorgegebene Betriebsweisen eingestellt, beispielsweise Codierer und Decodierer.

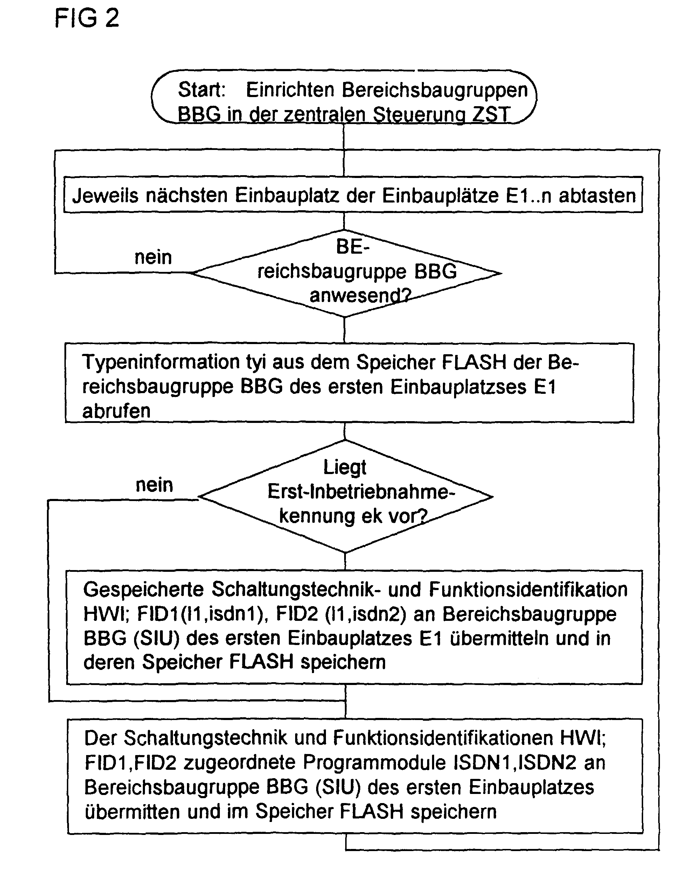

Die zumindest ein Funktionsidentifikation FID ist jeweils durch eine numerische Information FID1,2, eine Subfunktionen anzeigende Funktionsinformation 11,2 und durch eine das zu ladende Programmodul ISDN1,2 anzeigende Programmidentifikation isdnl,2 gebildet. Für das Ausführungsbeispiel sind zwei Funktionsidentifikationen FID1,2 angenommen. Es sind jedoch mehrere Funktionsidentifikationen FID - beispielsweise vier - möglich. Nach einer Übermittlung der Funktionsidentifikationen FID1,2 an die jeweilige Bereichsbaugruppe BBG ist zusammen mit der Schaltungstechnikidentifikation HWI die jeweilige Bereichsbaugruppe BBG hinsichtlich ihrer schaltungstechnischen Einstellungen und der zur realisierenden Funktionen eindeutig spezifiziert bzw. definiert. Anschließend werden die in den Funktionsidentifikationen FID1,2 angegeben und im Speicher SP der zentralen Steuerung ZST gespeicherten Programmodule ISDN1,2 an die jeweilige Bereichsbaugruppe BBG übermittelt und zusammen mit der Schaltungstechnik- und der zumindest einen Funktionsidentifikation HWI,FID1,2 im nichtflüchtigen, elektrisch lösch- und programmierbaren Speicher FLASH gespeichert. Der Ablauf bezüglich der Übermittlung und Speicherung der Schaltungstechnik- und der zumindest einen Funktionsidentifikation HWI,FID1,2 sowie der Programmodule ISDN1,2 ist in FIG 2 in dem sich selbst erläuterndem Ablaufdiagramm dargestellt. Im Ablaufdiagramm ist zur Unterscheidung einer Erstinbetriebnahme oder einer Änderung der der Bereichsbaugruppen bzw. des Kommunikationssystems eine Erst-Inbetriebnahmekennung ek angegeben. Diese Erst-Inbetriebnahmekennung ek wird beispielsweise mit Hilfe der zentralen Steuerung ZST gebildet und in die Kontifurationstabelle KT bei der Inbetriebnahme eingetragen. Nach der Erst-Inbetriebnahme wird die Kennung ek wieder gelöscht.

Der nichtflüchtige, elektrisch lösch- und programmierbare Speicher FLASH auf den Bereichsbaugruppen BBG kann alternativ durch einen EPROM für die Speicherung der Typeninformation tyi und einem ROM für die Speicherung der Programmodule IDSN1,2 ersetzt werden, wobei jedoch bei jedem Restart des Kommunikationssystems KS oder der jeweiligen Bereichsbaugruppe BBG ein erneutes Laden der Programmodule ISDN1,2 nach dem erfindungsgemäßen Verfahren erforderlich ist.

Das erfindungsgemäße Verfahren wird vorteilhaft auch zusammen mit den bekannten Baugruppen, d.h. im Mischbetrieb, eingesetzt. Hierbei ist jedoch für die Schaltungstechnikidentifikation HWI eine Bereichsbaugruppen-Typeninformation siu zu verwenden, wie sie auch bisher für die Identifikation der Baugruppen verwendet wurde und der Funktionsidentifikation FID wird lediglich eine numerische Information 0 zugeordnet. Durch die numerische Information 0 wird angezeigt, daß keine Bereichsbaugruppe BBG vorliegt. Die Auswahl und das Laden der Programmodule wird entsprechend den bekannten Verfahren durchgeführt.

## Patentansprüche

1. Verfahren zum Spezifizieren von Funktionen von prozessorgesteuerten Baugruppen eines mit einer zentralen Steuereinheit (ZST) ausgestatteten Kommunikationssystems (KS) in einem Kommunikationsnetz,
- bei dem die schaltungstechnischen Komponenten zumindest eines Funktionsbereiches auf zumindest einer Bereichsbaugruppe (BBG) zusammengefaßt werden, dadurch gekennzeichnet, daß
- bei dem die möglichen schaltungstechnischen und prozeduralen Funktionen einer Bereichsbaugruppe (BBG) jeweils durch die Kombination einer Schaltungstechnik- und zumindest einer Funktionsidentifikation (HWI,FWI1,2) spezifiziert werden,
- bei dem jeder Kombination einer Schaltungstechnik- und zumindest einer Funktionsidentifikation (HWI,FWI1,2) zumindest ein Programmodul (ISDN1,2) zugeordnet und im Kommunikationsnetz (KS) gespeichert ist,
- bei dem bei einer Konfiguration des Kommunikationssystems (KS) eine durch die zentrale Steuerung (ZST) bestimmte und in dieser gespeicherte Kombination einer Schaltungstechnik- und zumindest einer Funktionsidentifikation (HWI,FWI1,2) an die jeweilige Bereichsbaugruppe (BBG) übermittelt und dort im Sinne einer Spezifizierung der schaltungstechnischen und prozeduralen Funktionen der Bereichsbaugruppe (BBG) gespeichert wird,
- bei dem das zumindest eine, zugeordnete Programmodul (ISDN1,2) mit Hilfe der zentralen Steuerung (ZST) an die jeweilige Bereichsbaugruppe (BBG) übermittelt und in dieser gespeichert wird.

2. Verfahren nach Anspruch 1,
dadurch **gekennzeichnet,**
daß nach der Übermittlung des zumindest einen Programmoduls (ISDN1,2) an die jeweilige Bereichsbaugruppe (BBG) diese mit Hilfe der zentralen Steuerung (ZST) in Betrieb genommen und in den Funktionsablauf des Kommunikationssystems (KS) einbezogen wird.

3. Verfahren nach einem der Ansprüche 1 bis 2,
dadurch **gekennzeichnet,**
daß in der zentralen Steuerung (ZST) in einer Konfigurationstabelle (KT) die Konfiguration des Kommunikationssystems (KS) administriert ist, wobei in die Konfigurationstabelle (KT) für die konfigurierten Bereichsbaugruppen (BBG) jeweils eine Schaltungstechnik- und zumindest eine Funktionsidentifikation (HWI,FWI1,2) eingetragen ist.

4. Verfahren nach einem der Ansprüche 1 bis 4,
dadurch **gekennzeichnet,**
daß die Schaltungstechnikidentifikation (HWI) durch eine die wesentlichen Funktionen im Kommunikationssystem (KS) anzeigende Bereichsbaugruppen-Typeninformation (siu) repräsentiert ist.

5. Verfahren nach einem der Ansprüche 1 bis 5,
dadurch **gekennzeichet,**
daß die Funktionsidentifikationen (FID1,2) jeweils durch
- eine numerische Information,
- eine die Subfunktionalität des zu ladenden zumindest einen Programmoduls anzeigende Funktionsinformation (l1) und
- eine das zumindest eine zu ladende Programmodul (ISDN1,2) identifizierende Programmidentifikation (isdnl,2) gebildet ist.

6. Verfahren nach einem der vorhergehenden Ansprüche,
dadurch **gekennzeichnet,**
daß die Schaltungstechnik- und die zumindest eine Funktionsidentifikation ((HWI,FWI1,2)) in der Bereichsbaugruppe (BBG) in einem nichtflüchtigen, elektrisch lösch- und programmierbaren Speicher (FLASH) gespeichert sind.

7. Verfahren nach einem der vorhergehenden Ansprüche,
dadurch **gekennzeichnet,**
daß in einer Bereichsbaugruppe (BBG) in einem nichtflüchtigen, elektrisch lösch- und programmierbaren Speicher (FLASH) eine den Typ der Bereichsbaugruppe anzeigende Typeninformation (tyi) gespeichert ist.

8. Verfahren nach einem der vorhergehenden Ansprüche,
dadurch **gekennzeichnet,**
daß eine Konfiguration des Kommunikationssystem (KS) eine Erst-Inbetriebnahme einer Bereichsbaugruppe (BBG) oder eine Änderung der Konfiguration des Kommunikationssystems (KS) repräsentiert, wobei die Erst-Inbetriebnahme einer Bereichsbaugruppe (BBG) mit Hilfe der zentralen Steuerung (ZST) durch eine Erst-Inbetriebnahmekennung (ek) angezeigt wird.

## Claims

1. Method of specifying functions of processor-controlled subassemblies of a communication system (KS) in a communication network, the said communication system being equipped with a central control unit (ZST),
- in which the circuitry components of at least one functional area are combined on at least one area subassembly (BBG) characterized in that
- in which the possible circuitry and procedural functions of an area subassembly (BBG) are in each case specified by the combination of a circuitry identification and at least one function identification (HWI, FWI1, 2),
- in which at least one program module (ISDN1, 2) is assigned to each combination of a circuitry identification and at least one function identification (HWI, FWI1, 2) and is stored in the communication network (KS),
- in which, in one configuration of the communication system (KS), a combination of a circuitry identification and at least one function identification (HWI, FWI1, 2), the said combination being determined by the central controller (ZST) and being stored therein, is communicated to the respective area subassembly (BBG) and is stored therein in the sense of a specification of the circuitry and procedural functions of the area subassembly (BBG),
- in which the at least one, assigned program module (ISDN1, 2) is communicated with the aid of the central controller (ZST) to the respective area subassembly (BBG) and is stored in the latter.

2. Method according to Claim 1,
characterized
in that after the communication of the at least one program module (ISDN1, 2) to the respective area subassembly (BBG), the latter is put into operation with the aid of the central controller (ZST) and is incorporated into the functional sequence of the communication system (KS).

3. Method according to one of Claims 1 to 2,
characterized
in that the configuration of the communication system (KS) is administered in the central controller (ZST) in a configuration table (KT), in each case a circuitry identification and at least one function identification (HWI, FWI1, 2) being entered into the configuration table (KT) for the configured area subassemblies (BBG).

4. Method according to one of Claims 1 to 4,
characterized
in that the circuitry identification (HWI) is represented by an area subassembly type information item (siu) indicating the essential functions in the communication system (KS).

5. Method according to one of Claims 1 to 5,
characterized
in that the function identifications (FID1, 2) are in each case formed by
- a numerical information item,
- a function information item (l1) indicating the subfunctionality of the at least one program module to be loaded, and
- a program identification (isdn1, 2) identifying the at least one program module (ISDN1, 2) to be loaded.

6. Method according to one of the preceding claims
characterized
in that the circuitry identification and the at least one function identification ((HWI, FWI1, 2)) are stored in the area subassembly (BBG) in a non-volatile, electrically erasable and programmable memory (FLASH).

7. Method according to one of the preceding claims,
characterized
in that a type information item (tyi) indicating the type of area subassembly is stored in an area subassembly (BBG) in a non-volatile, electrically erasable and programmable memory (FLASH).

8. Method according to one of the preceding claims,
characterized
in that one configuration of the communication system (KS) represents an initial start-up of an area subassembly (BBG) or a change in the configuration of the communication system (KS), the initial start-up of an area subassembly (BBG) being indicated with the aid of the central controller (ZST) by means of an initial start-up identifier (ek).

## Revendications

1. Procédé pour la spécification de fonctions de modules commandés par processeurs d'un système de communication (KS) équipé d'une commande centrale (ZST) dans un réseau de communication,
- dans lequel on regroupe les composants de circuits d'au moins un domaine de fonction sur au moins un module de domaine (BBG),
caractérisé par le fait que
- les fonctions possibles des techniques de circuits et des procédures d'un module de domaine (BBG) sont spécifiées à chaque fois par la combinaison d'une identification de circuit (HWI) et d'au moins une identification de fonction (FID1, FID2),
- on associe à chaque combinaison d'une identification de circuit (HWI) et d'au moins une identification de fonction (FID1, FID2) au moins un module de programme (ISDN1, ISDN2) et on le mémorise dans le système de communication (KS),
- lors d'une configuration du système de communication (KS), on transmet une combinaison, déterminée par la commande centrale (ZST) et mémorisée dans celle-ci, d'une identification de circuit (HWI) et d'au moins une identification de fonction (FID1, FID2) au module de domaine (BBG) concerné et on la mémorise dans celui-ci en vue d'une spécification des fonctions techniques de circuits et de procédures du module de domaine (BBG),
- on transmet le ou les modules de programmes associés (ISDN1, ISDN2) à l'aide de la commande centrale (ZST) au module de domaine (BBG) concerné et on le ou les mémorise dans celui-ci.

2. Procédé selon la revendication 1,
caractérisé par le fait que,
après la transmission du ou des modules de programmes (ISDN1, ISDN2) au module de domaine (BBG) concerné, on met en service ce ou ces modules de programmes à l'aide de la commande centrale (ZST) et on les inclut dans la séquence fonctionnelle du système de communication (KS).

3. Procédé selon l'une des revendications 1 à 2,
caractérisé par le fait que,
dans la commande centrale (ZST), la configuration du système de communication (KS) est gérée dans un tableau de configuration (KT), une identification de circuit (HWI) et au moins une identification de fonction (FID1, FID2) étant enregistrées dans le tableau de configuration (KT) pour chacun des modules de domaines (BBG) configurés.

4. Procédé selon l'une des revendications 1 à 3,
caractérisé par le fait que
l'identification de circuit (HWI) est représentée par une information de type de module de domaine (siu) indiquant les fonctions essentielles dans le système de communication (KS).

5. Procédé selon l'une des revendications 1 à 4,
caractérisé par le fait que
les identifications de fonctions (FID1, FID2) sont formées chacune par
- une information numérique,
- une information de fonction (11) indiquant la sous-fonctionnalité du ou des modules de programmes à charger et
- une identification de programme (isdn1, isdn2) identifiant le ou les modules de programmes (ISDN1, ISDN2) à charger.

6. Procédé selon l'une des revendications précédentes,
caractérisé par le fait que
l'identification de circuit (HWI) et la ou les identifications de fonctions (FID1, FID2) sont mémorisées dans le module de domaine (BBG) dans une mémoire (FLASH) non volatile, effaçable et programmable électriquement.

7. Procédé selon l'une des revendications précédentes,
caractérisé par le fait que,
dans un module de domaine (BBG), une information de type (tyi) indiquant le type du module de domaine est mémorisée dans une mémoire (FLASH) non volatile, effaçable et programmable électriquement.

8. Procédé selon l'une des revendications précédentes,
caractérisé par le fait que
une configuration du système de communication (KS) correspond à une première mise en service d'un module de domaine (BBG) ou à une modification de la configuration du système de communication (KS), la première mise en service d'un module de domaine (BBG) étant indiquée à l'aide de la commande centrale (ZST) par un identificateur de première mise en service (ek).
